# EUROPEAN PATENT SPECIFICATION

(11) **EP 1 373 059 B1**
(45) Date of publication and mention of the grant of the patent: **28.05.2008**
(21) Application number: 02713128.3
(22) Date of filing: 28.03.2002
(51) Int. Cl.: B62M 9/12

(54) **A DERAILLEUR FOR BICYCLE GEAR SHIFTERS**
KETTENSCHALTUNG FÜR FAHRRADGANGSCHALTER
DERAILLEUR POUR DISPOSITIF DE CHANGEMENT DE VITESSE DE BICYCLETTE

(30) Priority: 30.03.2001 IT BO20010191
(43) Date of publication of application: 02.01.2004
(73) Proprietor: Porcari, Gabriele, 40125 Bologna (IT)
(72) Inventor: Porcari, Gabriele, 40125 Bologna (IT)
(74) Representative: di Francia, Vincenzo
(86) International application number: PCT/IB2002/001029
(87) International publication number: WO 2002/079023

(56) References cited:
- EP-A1- 0 428 085
- EP-A1- 0 718 184
- US-A- 5 389 043

## Description

### Technical field

The present invention relates to a derailleur for shifting the gears of a bicycle.

### Background Art

The derailleur according to the present invention is used to move the chain of a bicycle over a series of adjacent sprockets or cogs, mounted in order of decreasing diameter, from the largest to the smallest, on a central support hub or on the rear hub of the bicycle.

In particular, the derailleur according to the present invention can be used advantageously but not exclusively as a front derailleur for road bikes, mountain bikes or racing bikes.

Today, most road, mountain or racing bikes have a front derailleur mounted on the part of the frame that, usually, also supports the saddle. The front derailleur is associated with a series of front sprockets mounted on the central hub and attached to, and thus rotatable with, the bike pedals. In addition to the front derailleur, the bike also usually has a rear derailleur associated with a series of rear sprockets mounted on the rear hub and attached to, and thus rotatable with, the rear wheel. The front derailleur acts, at a relatively high gear shifting speed, on the upper section of the chain, moving in the direction of the front sprockets, while the rear derailleur acts, at a relatively low gear shifting speed, on the lower section of the chain, moving back towards the rear sprockets.

The relative slowness of the rear derailleur is due to the fact that there is a slight delay, after the gear shift control is actuated, between the time the front gear can be shifted and the time the rear gear can be shifted.

Each of the two derailleurs is actuated by a control lever on the handlebar in such a way as to move the chain from one sprocket to another. The actual movement of the chain is effected by an interposed elastic element such as a spring.

Bicycles usually have two or three front sprockets and nine or ten rear sprockets, depending on whether they are road bikes, mountain bikes or racing bikes. More specifically, mountain bikes usually have three sprockets at the front and nine at the back, while racing bikes usually have two sprockets at the front and ten at the back.

The different combination of sprockets between road or mountain bikes and racing bikes is due to the fact that road and mountain bikes require a high number of gear ratio combinations to better adapt to highly variable road and track conditions, whereas, on racing bikes, gear shifting manoeuvrability, presently guaranteed by the rear derailleur, is more important.

In both racing or mountain bikes and racing bikes, however, although the use of front sprockets ensures a higher gear change speed than rear sprockets, the number of front sprockets has up to now been limited by the fact that the use of front derailleurs of known type makes it difficult to operate on the tensioned section of the chain.

One type of prior art derailleur is disclosed in United States patent US - 5,389,043. In that patent, the mechanical stress to which the derailleur is subjected and the actuating effort required of the cyclist are closely connected to the distance the chain is to be moved by. In particular, if the chain is to be moved from the innermost sprocket to the outermost one or vice versa, the resulting stress and effort become so high that it is not advisable to have more than three sprockets, especially on account of chain tension.

EP 0 718 184, on which the preamble of claim 1 is based, discloses a derailleur for the gear shifters of bicycles comprising a frame, a hub rotatably supported by the frame, a plurality of sprokets supported by the hub, and a drive chain that can be selectively engaged with each of the sprockets, the derailleur comprising a support element mounted on the frame and at least one derailing element for moving the chain over the sprockets, said derailing element comprising cam means designed to engage with and gradually and slidably guide the chain from one sprocket to another.

### Disclosure of the invention

The present invention has for an object to provide a derailleur for bicycle gear shifters that overcomes the above mentioned drawbacks and that, in particular, is capable of operating on the tensioned section of the chain in conjunction with a relatively high number of sprockets.

Accordingly, the present invention provides a derailleur for the gear shifters of bicycles comprising a frame, a hub rotatably supported by the frame, a plurality of sprockets supported by the hub, and a transmission chain that can be selectively engaged with each of the sprockets. The derailleur comprises a support element mounted on the frame and at least one derailing element for moving the chain over the sprockets. The derailing element comprises cam means designed to engage with and gradually and slidably guide the chain from one sprocket to another, and has a substantially conical shape.

### Brief description of the drawings

The invention will now be described with reference to the accompanying drawings which illustrate preferred embodiments of it and in which:
- Figure 1 is a schematic side view of a bicycle equipped with a gear shifting device with a derailleur made according to the present invention;
- Figure 2 is a scaled-up view of a detail from Figure 1;
- Figure 3 is a schematic plan view of a part of the bicycle shown in Figure 1;
- Figure 4 is a schematic perspective view of the derailleur of Figure 1;
- Figure 5 is another schematic perspective view of the derailleur made according to the present invention;
- Figure 6 is a plan view of the derailleur of Figure 5;
- Figures 7 to 10 and 11 to 18 are front views of different derailing elements of the derailleur according to the present invention in successive operating positions;
- Figure 19 is a rotation diagram of the means for actuating the derailleur according to the present invention, in a plan view;
- Figures 20 and 21 are, respectively, a perspective view and a top plan view, with some parts in cross section to better illustrate others, of another embodiment of the derailleur actuating means;
- Figures 22 and 23 are schematic perspective views of yet another embodiment of derailing elements of the derailleur according to the invention.

### Detailed description of the preferred embodiments of the invention

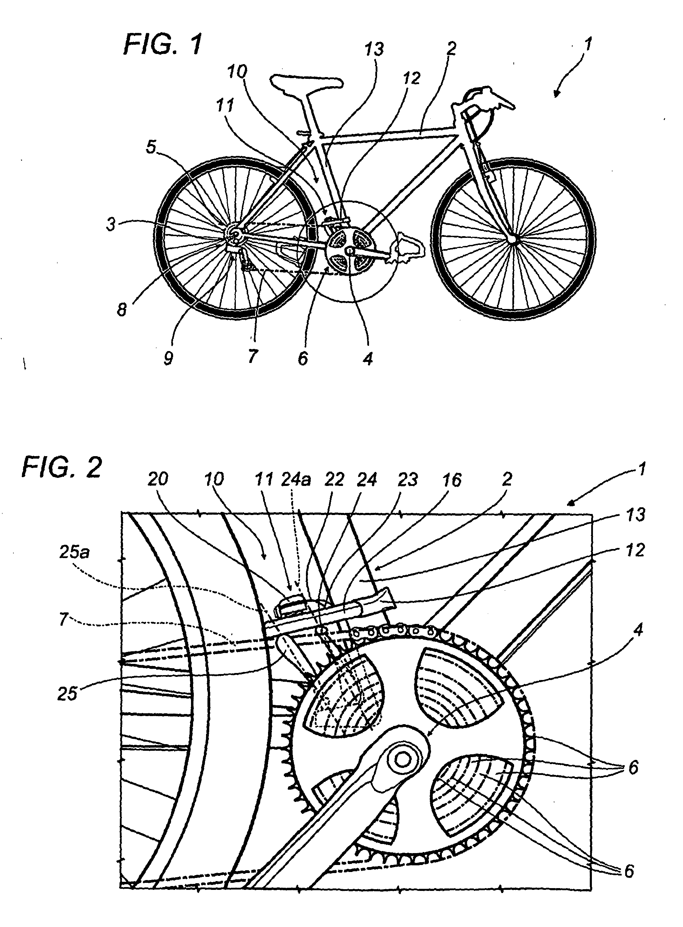

With reference to Figure 1, the numeral 1 denotes in its entirety a bicycle comprising a frame 2, rear hub 3 where the rear wheel of the bicycle 1 is rotatably supported by the frame 2, and a central hub 4 by which the frame 2 also rotatably supports the pedals of the bicycle 1. The hub 3 has three adjacent rear sprockets 5 keyed to it in order of decreasing diameter, while the hub 4 has nine front adjacent sprockets 6 keyed to it, also in order of decreasing diameter.

The bicycle 1 also comprises a drive chain 7 which can be selectively engaged with different pairs of sprockets, each consisting of a rear sprocket 5 and a front sprocket 6.

The bicycle 1 further comprises a rear gear shifter, labelled 8 in its entirety, designed to move the chain 7 over from one rear sprocket 5 to another. The gear shifter 8 comprises a rear derailleur 9 of known type and therefore not illustrated in detail, and a lever, which is not illustrated, for actuating the derailleur 9.

As shown in more detail in Figure 2, the bicycle 1 further comprises a front gear shifter, labelled 10 in its entirety, designed to move the chain 7 over from one front sprocket 6 to another. The gear shifter 10 comprises a front derailleur 11 and a lever, which is not illustrated, for actuating the derailleur 11.

The derailleur 11 comprises a supporting element 12 that is removably mounted on the frame 2 tubular portion 13 which, in the embodiment illustrated and purely by way of example, mounts the saddle of the bicycle 1.

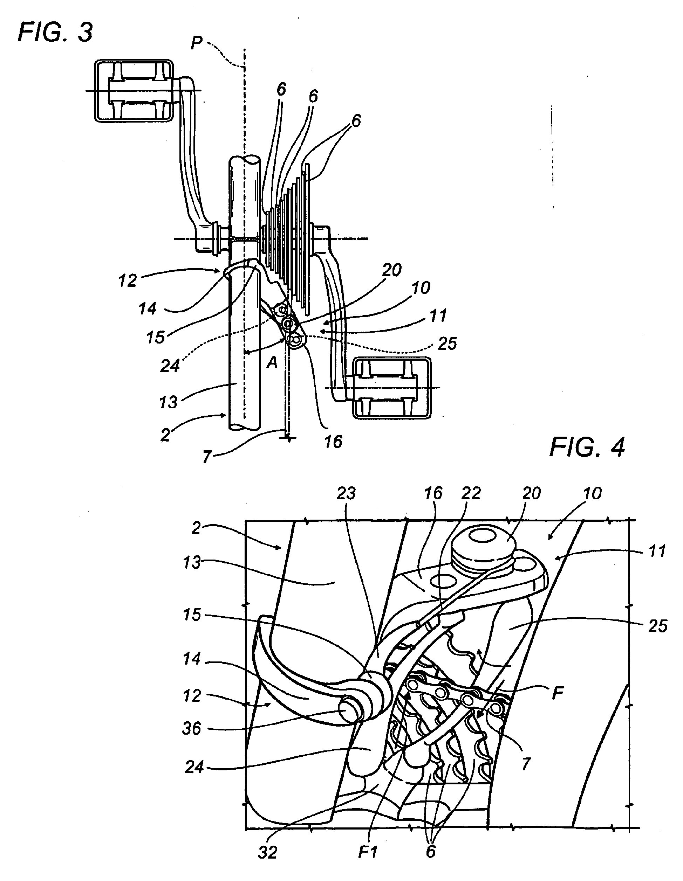

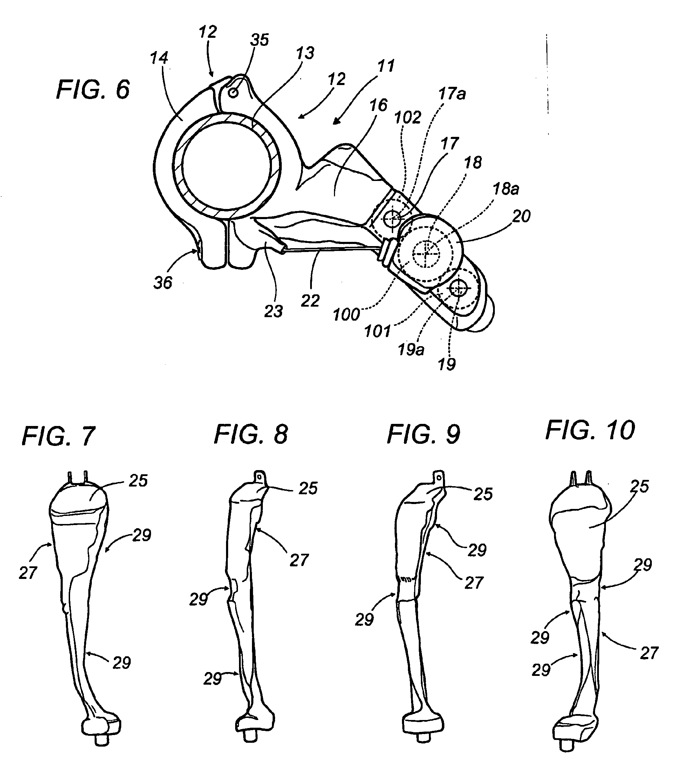

Looking more closely at the constructional details shown in Figure 6, illustrating a preferred, non-restricting embodiment, the supporting element 12 comprises two half rings 14 and 15, which, when the element 12 is mounted on the portion 13, are located slightly above the chain 7, each surrounding and gripping a part of the portion 13. In particular, as illustrated in more detail in Figures 3 and 4, the half ring 14 is located on the side of the portion 13 opposite the chain 7, while the half ring 15 is located on the same side of the portion 13 as the chain 7. The half rings 14 and 15 are pivoted to each other on a pin 35 and are designed to be locked to each other by screw fastening means 36.

The half ring 15 supports an offset element 16 shaped substantially like a parallelepiped and projecting over the chain 7 in an oblique direction relative to the chain 7. Looking in more detail, the element 16 projects towards the rear end of the bicycle 1, slightly inclined downwards, starting from the half ring 15, and makes a defined angle A with the longitudinal midplane P of the bicycle 1.

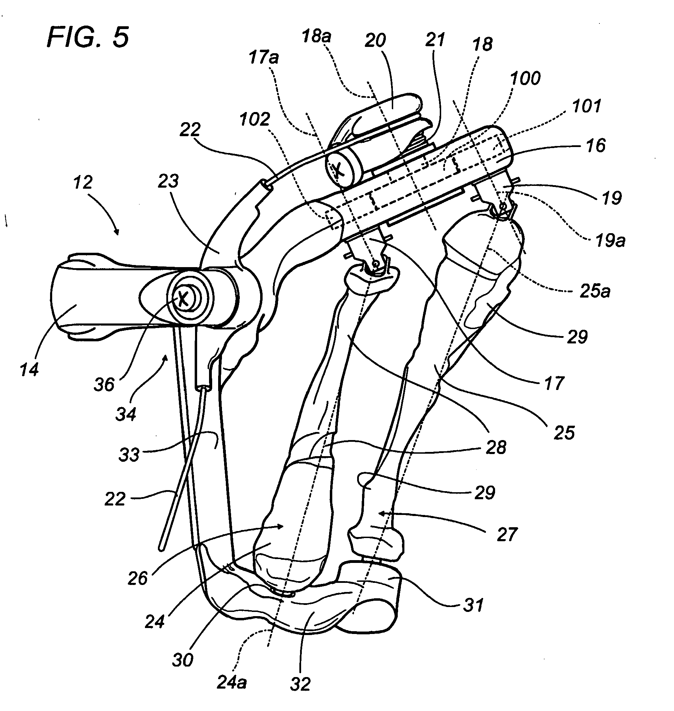

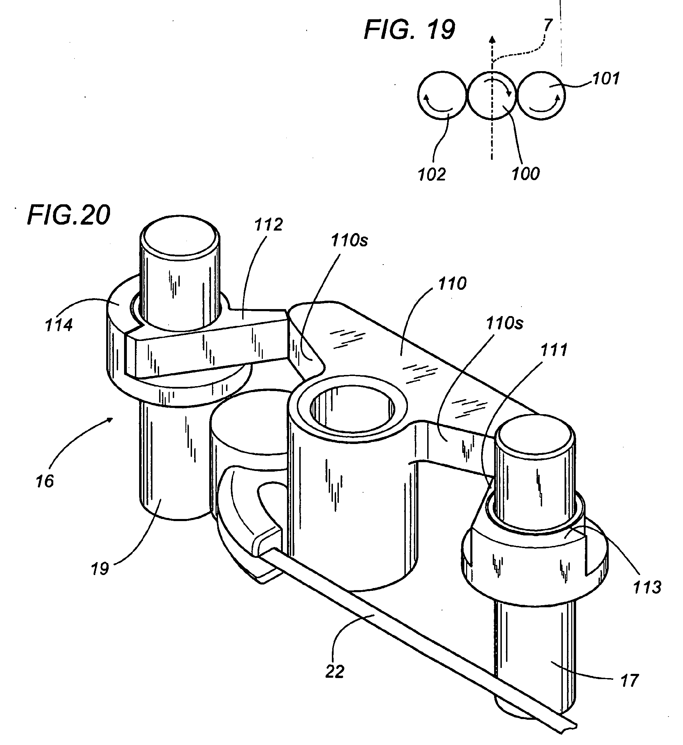

The projecting element 16 houses a gear consisting of three toothed wheels 100, 101, 102, drawn with a dashed line in Figures 5 and 6 and illustrated schematically in Figure 19, since it is a well known type of mechanism in the field of bicycle gears. The toothed wheels are arranged in line and coupled in cascade fashion so that the first and last wheels turn in the same direction.

Starting from the end of the element 16 that projects from the half ring 15, the three wheels are keyed to respective pins 17, 18 and 19 which are rotatably supported by the projecting element 16. Looking in more detail, when the derailleur 11 is in the working position, the pins 17 and 19 extend transversally downwards from the projecting element 16, while the pin 18 extends transversally upwards. The axes of rotation 17a, 18a and 19a of the pins 17, 18 and 19 are parallel to each other and angled slightly relative to the vertical.

The pin 18 has mounted on it a substantially cylindrical actuating element 20, which, at one end, is attached, purely by way of example, to a helical spring 21 supported by the projecting element 16, and, at the other end, is adjustably attached to a pull cable 22 leading to the aforementioned lever, not illustrated, used to actuate the gear shifter 10 and located on the handlebar of the bicycle 1. The cable 22 is guided along part of its path by a hollow element 23 attached to the half ring 15.

The pins 17 and 19 have rotatably mounted on them two respective derailing elements 24, 25 designed to guide the chain 7 off the sprockets 6.

The elements 24 and 25 both have a substantially conical, curved shape and, when the derailleur 11 is in the working position, are located on opposite sides of the chain 7. More specifically, the derailing element 24 is located between the frame 2 and the chain 7, while the derailing element 25 is located on the outer side of the chain 7.

The derailing element 24 is positioned with its tip facing its mounting pin 17, while the derailing element 25 is positioned with its tip facing away from its mounting pin 19. The derailing elements 24 and 25 have differing, irregularly shaped outer surfaces 26 and 27 that form a plurality of cams 28 and 29 designed to engage with the chain 7 and to gradually and slidably guide it from one sprocket 6 to another. More specifically, the cams 28 and 29 constitute respective guides 28 and 29 designed to operate in conjunction with each other in such a way as to slide the chain 7 smoothly and gradually off the sprockets 6 during the derailing action.

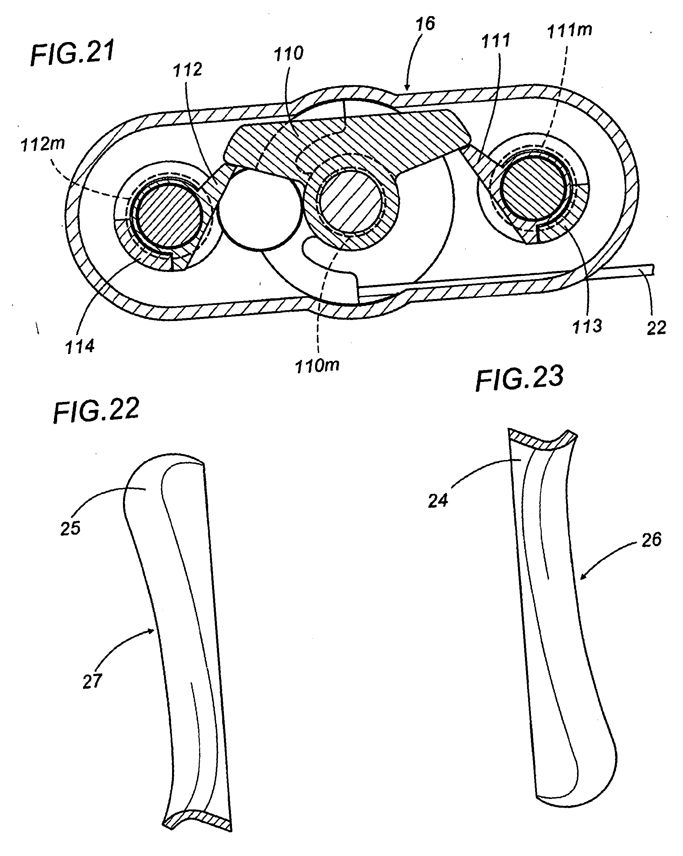

In another embodiment of the derailing elements 24 and 25, illustrated in Figures 22 and 23, the surfaces 26 and 27 constituting the chain 7 actuating cams are smoother and more regular.

At their opposite ends, relative to their respective mounting pins 17 and 19, the derailing elements 24 and 25 can be rotatably supported in respective sockets 30 and 31 made in a plate 32 forming part of the supporting element 12.

From the plate 32 there extends transversally upwards a curved projecting element 33 designed to surround the part of the portion 13 located directly under the half ring 15. As shown in Figures 5 and from 7 to 10, the projecting element 33 and the half ring 15 are shaped to form quick release fitting means 34 that engage the projecting element 33 and the half ring 15 with each other when the two half rings 14 and 15 are locked to each other by the screw fastening means 36. Thus, the supporting element 12 can be easily fitted to and removed from the frame 2 using only the screw fastening means 36. Further, the possibility of disengaging the projecting element 33 from the half ring 15, as shown in Figure 5, enables the derailing elements 24 and 25 to be removed from their sockets 30 and 31 allowing them to be easily removed / fitted around the chain 7.

As shown also in Figures 3 and 4, when the supporting element 12 is mounted on the frame 2, with the derailleur 11 in the working position, the relative position of the sockets 30 and 31 and of the pins 17 and 19 is such as to enable the derailing elements 24 and 25 to rotate about their substantially parallel axes of rotation 24a and 25a. Looking in more detail, the axes 24a and 25a make with the vertical a defined angle that is less than 90° and the derailing elements 24 and 25 rotate about their axes 24a and 25a in the same direction thanks to the rotation of the pins 17 and 19 (as shown in the diagram of Figure 19).

Thus (see Figure 19 again), each of the derailing elements 24 and 25 rotates independently of the other in the same direction as the chain 7 in such a way as to slidably derail the chain 7 and move it from one sprocket 6 to another in one direction or the other, either downshifting or upshifting the gear.

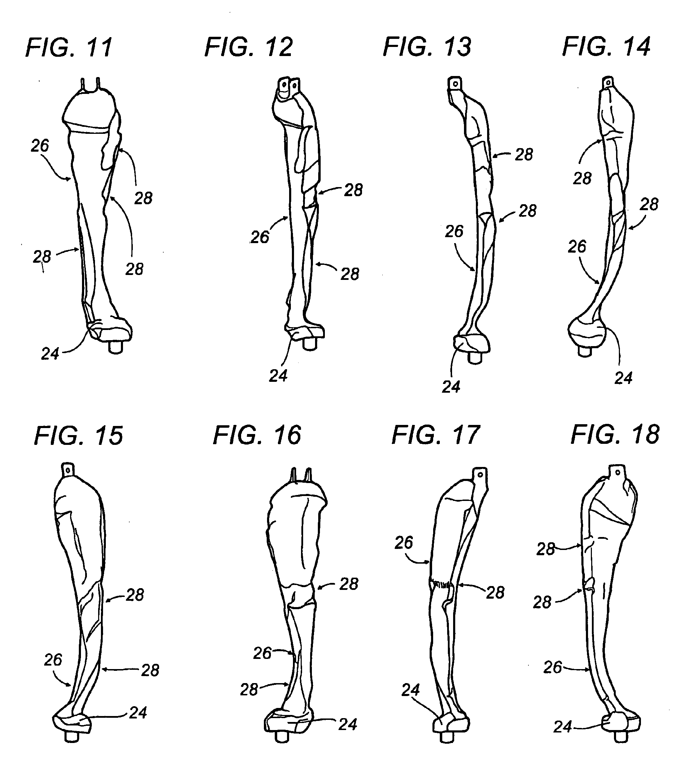

As shown in Figures 7 to 10 and 11 to 18, the cams 28 and 29 are made in such a way that the derailing action that they apply to the chain 7 has a horizontal derailing component as well as a vertical derailing component, and they have a plurality of angular positions around their respective axes 24a and 25a in which they impinge on the chain 7, and a plurality of angular positions in which they do not impinge on the chain 7. The angular impingement positions are unstable and alternated with the non-impingement positions, which, instead, are stable and, in particular, are equal in number to the number of front sprockets 6, that is to say, nine.

The sliding of the chain 7 over the sprockets 6 in the direction of decreasing sprocket diameter is guaranteed by a first direction of rotation of the actuating element 20 (applied to the derailing element 25), while the sliding of the chain 7 over the sprockets 6 in the direction of increasing sprocket diameter is guaranteed by a second direction of rotation of the actuating element 20, opposite to the first (applied to the derailing element 24) - see also arrows F and F1 in Figure 4. In both cases, the spring 21 or other equivalent element has an elastic action on the rotation of the derailing elements 24 and 25 about their axes 24a and 25a.

Figures 20 and 21 illustrate another embodiment of the control system housed in the projecting element 16. In this embodiment, the system consists of three levers 110, 111 and 112. The first lever 110 is axially actuated by the pin 18 and, thanks to its T-shaped profile, alternately imparts rotation on the other two levers 111 and 112. The two levers 111 and 112 are positioned on each side of the first lever 110 and are permanently in contact with it. The two levers 111 and 112 actuate the derailing elements 24 and 25 thanks to their respective contact profiles 113 and 114 which are integral with the pins 17 and 19.

The rotation of the first lever 110 causes the two levers 111 and 112 to rotate alternately in the same direction through a defined angle (always fixed and small) depending on the extent of the surfaces 110s of the first lever 110 that are in contact with the levers 111 and 112. In this case too, the automatic return to the «neutral» position is accomplished by elastic elements (springs) fitted over the lever 110 to oppose the actuating force of the aforementioned cable 22 and over the levers 111 and 112 that actuate the derailing elements 24 and 25. In figure 21, the springs 110m, 111m and 112m are drawn with dashed lines.

The main novelty of the gear shifter 10 described above is the possibility of selecting a gear, whether the bicycle 1 is moving or not, smoothly and easily and without any limit on gear ratio.

Indeed, the effort that the cyclist has to make to change gear is independent of the number of sprockets 6 to be skipped in derailing the chain 7 and is equal to the effort required to make the angular position of the cams 28 and 29 unstable, independently also of the distance by which the chain 7 has to be displaced. The angle through which the actuating element 20 is turned about the axis 18a determines the new stable angular position of non-impingement of the cams 28 and 29 relative to the chain 7, and the latter is guided gently and smoothly by the cams 28 and 29 to move from the sprocket 6 giving the gear ratio the cyclists wishes to change from to the sprocket 6 giving the ratio the cyclist wishes to change to: in practice, the derailleur according to the invention imparts the same amount of movement on the chain 7 irrespective of the gear selected.

It should also be stressed that in a bicycle 1 as described above, the rear derailleur 9 can also be substituted by the derailleur 11, although the latter is suitable in particular for use as a front derailleur to act on the tensioned section of the chain 7.

Moreover, the derailleur 11 is easy to retrofit on existing bicycles, both at the front and at the back, by simply substituting the hubs and sprockets. In the case of the front of the bicycle, the nine sprockets associated to the derailleur 11 described above can easily be mounted between the pedals of any conventional bicycle with only a minimal adjustment of the axial distance between the pedals.

Lastly, it should also be stressed that the overall weight of the bicycle 1 described above is substantially the same as that of a conventional bicycle with the same features, having three sprockets at the front and nine at the back, the total number of sprockets remaining the same, that is to say, twelve. However, fitting the nine sprockets at the front instead of at the back has evident advantages, conferring greater manoeuvrability and versatility, making the gear shift action quicker and improving weight distribution. In particular, the back of the bicycle is lighter and more manageable.

Further advantages of the derailleur according to the invention are:
- rapid gear shifting irrespective of rear wheel rpm;
- reduced shifting space, which may be equal to half the turn of a pedal to derail the chain through nine ratios;
- quick and easy selection of required gear, even when the bicycle is not moving;
- the special design of the bilateral cam elements protects the chain from being thrown off the sprockets and thus improves bicycle riding safety.

It will be understood that the invention can be subject to modifications and variations without thereby departing from the scope of the inventive concept as claimed.

## Claims

1. A derailleur for the gear shifters of bicycles comprising a frame (2), a hub (4) rotatably supported by the frame (2), a plurality of sprokets (6) supported by the hub (4), and a drive chain (7) that can be selectively engaged with each of the sprockets (6), the derailleur (11) comprising a support element (12) mounted on the frame (2) and at least one derailing element (24, 25) for moving the chain (7) over the sprockets (6), said derailing element (24, 25) comprising cam means (28, 29) designed to engage with and gradually and slidably guide the chain (7) from one sprocket (6) to another, the derailleur (11) being **characterized in that** the derailing element (24, 25) has a substantially conical shape.

2. The derailleur according to claim 1, **characterised in that** the cam means (28, 29) constitute a plurality of sliding guides (28, 29) designed to engage with and gradually and slidably guide the chain (7) from one sprocket (6) to another.

3. The derailleur according to claim 1 or 2, **characterised in that** the derailing action applied by the cam means (28, 29) to the chain (7) has a horizontal derailing component and a vertical derailing component.

4. The derailleur according to any of the foregoing claims from 1 to 3, **characterised in that** the derailing element (24, 25) is mounted on the supporting element (12) in such a way as to rotate about an axis (24a, 25a).

5. The derailleur according to claim 4, **characterised in that** the axis (24a, 25a) makes a defined angle under 90° with the vertical.

6. The derailleur according to claim 4 or 5, **characterised in that** the cam means (28, 29) have a plurality of angular positions around the axis (24a, 25a) in which they impinge on the chain (7), and a plurality of angular positions in which they do not impinge on the chain (7); said angular positions of impingement being alternated with the angular positions of non-impingement.

7. The derailleur according to claim 6, **characterised in that** the angular positions of impingement are unstable and the angular positions of non-impingement are stable.

8. The derailleur according to claim 6 or 7, **characterised in that** the angular positions of non-impingement are more than three in number.

9. The derailleur according to any of the foregoing claims from 1 to 8, **characterised in that** the derailing element (24, 25) has a substantially curved shape.

10. The derailleur according to any of the foregoing claims from 1 to 9, **characterised in that** it comprises two derailing elements (24, 25) designed to operate in conjunction to move the chain (7) over the sprockets (6); the derailing elements (24, 25) comprising respective cam means (28, 29) designed to engage with and gradually and slidably guide the chain (7) from one sprocket (6) to another.

11. The derailleur according to claim 10, **characterised in that** there is one derailing element (24, 25) on each side of the chain (7).

12. The derailleur according to claim 10 or 11, **characterised in that** the derailing elements (24, 25) are mounted on the supporting element (12) in such a way as to rotate about respective axes (24a, 25a) which are substantially parallel to each other.

13. The derailleur according to claim 12, **characterised in that** it comprises actuating means (20, 21, 22) designed to impart on the derailing elements (24, 25) respective rotations about the axes (24a, 25a).

14. The derailleur according to claim 13, **characterised in that** the derailing elements (24, 25) rotate in the same direction.

15. The derailleur according to claim 13 or 14, **characterised in that** the actuating means (20, 21, 22) comprise elastic means (21) that have an elastic action on the rotation of the derailing elements (24, 25) about their axes (24a, 25a).

16. A bicycle gear shifter **characterised in that** it comprises a derailleur (11) according to any of the foregoing claims from 1 to 15.

17. A bicycle, **characterised in that** it comprises at least one derailleur (11) according to any of the foregoing claims from 1 to 15.

18. The bicycle according to claim 17 and comprising a drive chain (7), a central hub (4) that drives the chain (7), a rear hub (3) driven by the chain (7), a plurality of front sprockets (6) mounted on the central hub (4) and a plurality of rear sprockets (5) mounted on the rear hub (3), the bicycle being **characterised in that** the number of front sprockets (6) is greater than the number of rear sprockets (5).

19. The bicycle according to claim 18, **characterised in that** the front sprockets (6) are more than tree in number.

## Patentansprüche

1. Kettenschaltung für Fahrradgangschalter, mit einem Gestell (2), einer von dem Gestell (2) drehbar getragenen Nabe (4), einer Pluralität von der Nabe (4) getragener Kettenzahnräder (6) und einer Treibkette (7), die mit jedem der Kettenzahnräder (6) selektiv eingreifen kann, wobei die Kettenschaltung (11) ein an dem Gestell (2) angebautes Tragelement (12) und wenigstens ein Kettenschaltungselement (24, 25) zum Bewegen der Treibkette (7) auf die Kettenzahnräder (6) umfasst, wobei das Kettenschaltungselement (24, 25) Nockenmittel (28, 29) umfasst, die geeignet sind, die Treibkette (7) einzugreifen und stufenweise und gleitend von einem Kettenzahnrad (6) zu dem Anderen zu führen, **dadurch gekennzeichnet, dass** das Kettenschaltungselement (24, 25) im Wesentlichen kegelförmig gebildet ist.

2. Kettenschaltung nach Anspruch 1, **dadurch gekennzeichnet, dass** die Nockenmittel (28, 29) eine Pluralität Gleitschienen (28, 29) umfassen, die geeignet sind, die Treibkette (7) einzugreifen und stufenweise und gleitend von einem Kettenzahnrad (6) zu dem Anderen sie zu führen.

3. Kettenschaltung nach Anspruch 1 oder 2, **dadurch gekennzeichnet, dass** die von den Nockenmittel (28, 29) auf die Kette (7) ausgeübte Schaltungswirkung eine horizontale Komponente und eine vertikale Komponente hat.

4. Kettenschaltung nach einem der vorhergehenden Ansprüche von 1 bis 3, **dadurch gekennzeichnet, dass** das Kettenschaltungselement (24, 25) an dem Tragelement (12) angebaut ist, sodass es sich um eine Achse (24a, 25a) drehen kann.

5. Kettenschaltung nach Anspruch 4, **dadurch gekennzeichnet, dass** die Achse (24a, 25a) einen definierten Winkel geringer als 90° mit der Senkrechte bildet.

6. Kettenschaltung nach Anspruch 4 oder 5, **dadurch gekennzeichnet, dass** die Nockenmittel (28, 29) eine Pluralität winkelförmiger Stellen um die Achse (24a, 25a) aufweisen, bei denen sie mit der Kette (7) stoßen, und eine Pluralität winkelförmiger Stellen, bei denen sie mit der Kette (7) nicht stoßen, wobei die genannten winkelförmigen Stellen zum Stoßen einander mit den winkelförmigen Stellen zum Nicht-Stoßen abwechseln.

7. Kettenschaltung nach Anspruch 6, **dadurch gekennzeichnet, dass** die winkelförmigen Stellen zum Stoßen unstetig sind und die winkelförmigen Stellen zum Nicht-Stoßen stetig sind.

8. Kettenschaltung nach Anspruch 6 oder 7, **dadurch gekennzeichnet, dass** die winkelförmigen Stellen zum Nicht-Stoßen mehr als drei sind.

9. Kettenschaltung nach einem der vorherigen Ansprüche von 1 bis 8, **dadurch gekennzeichnet, dass** das Kettenschaltungselement (24, 25) im Wesentlichen bogenförmig ist.

10. Kettenschaltung nach einem der vorherigen Ansprüche von 1 bis 9, **dadurch gekennzeichnet, dass** sie zwei Kettenschaltungselemente (24, 25) umfasst, die geeignet sind, zusammen zu funktionieren, um auf die Kettenzahnräder (6) die Kette (7) zu bewegen, wobei die Kettenschaltungselemente (24, 25) jeweilige Nockenmittel (28, 29) umfassen, die geeignet sind, die Treibkette (7) einzugreifen und stufenweise und gleitend von einem Kettenzahnrad (6) zu dem Anderen sie zu führen.

11. Kettenschaltung nach Anspruch 10, **dadurch gekennzeichnet, dass** es ein Kettenschaltungselement (24, 25) auf jeder Seite der Kette (7) gibt.

12. Kettenschaltung nach Anspruch 10 oder 11, **dadurch gekennzeichnet, dass** die Kettenschaltungselemente (24, 25) an dem Tragelement (12) so angebaut sind, dass sie sich um jeweilige Achsen (24a, 25a) drehen können, die im Wesentlichen parallel zueinander sind.

13. Kettenschaltung nach Anspruch 12, **dadurch gekennzeichnet, dass** sie Steuermittel (20, 21, 22) umfasst, die geeignet sind, entsprechenden Umdrehungen der Kettenschaltungselemente (24, 25) um die Achsen (24a, 25a) durchzuführen.

14. Kettenschaltung nach Anspruch 13, **dadurch gekennzeichnet, dass** sich die Kettenschaltungselemente (24, 25) in dieselbe Richtung drehen.

15. Kettenschaltung nach Anspruch 10 oder 11, **dadurch gekennzeichnet, dass** die Steuermittel (20, 21, 22) elastische Mittel (21) umfassen, die eine elastische Wirkung auf die Umdrehung der Kettenschaltungselemente (24,25) um ihre Achsen (24a, 25a) haben.

16. Fahrradgangschalter **dadurch gekennzeichnet, dass** er eine Kettenschaltung (11) nach einem der vorherigen Ansprüche von 1 bis 15 umfasst.

17. Fahrrad, **dadurch gekennzeichnet, dass** es wenigstens eine Kettenschaltung (11) nach einem der vorherigen Ansprüche von 1 bis 15 umfasst.

18. Fahrrad nach Anspruch 17 und umfassend eine Treibkette (7), eine zentrale Nabe (4), die die Kette (7) treibt, eine von der Kette (7) getriebene rückwärtige Nabe (3), eine Pluralität vorderer Kettenzahnräder (6), die auf der zentralen Nabe (4) angebaut sind, und eine Pluralität rückwärtiger Kettenzahnräder (5), die auf der rückwärtigen Nabe (4) angebaut sind, **dadurch gekennzeichnet, dass** die Zahl von vorderen Kettenzahnrädern (6) größer als die Zahl von rückwärtigen Kettenzahnrädern (5) ist.

19. Fahrrad nach Anspruch 18 **dadurch gekennzeichnet, dass** die vorderen Kettenzahnräder (6) mehr als drei sind.

## Revendications

1. Dérailleur pour dispositif de changement de vitesse de bicyclette comprenant un châssis (2), un moyeu (4) supporté tournant par le châssis (2), une pluralité de pignons (6) supportés par le moyeu (4), et une chaîne de transmission (7) qui peut sélectivement s'accoupler avec chacun des pignons (6), le dérailleur (11) comprenant un élément de support (12) monté sur le châssis (2) et au moins un élément dérailleur (24, 25) pour bouger la chaîne (7) sur les pignons (6), ledit élément dérailleur (24, 25) comprenant des moyens à came (28, 29) adaptés à s'accoupler avec et à guider de façon graduelle et glissante la chaîne (7) d'un pignon (6) à l'autre, le dérailleur (11) étant **caractérisé en ce que** l'élément dérailleur (24, 25) a essentiellement une forme conique.

2. Dérailleur selon la revendication 1, **caractérisé en ce que** les moyens à came (28, 29) constituent une pluralité de guides de glissement (28, 29) adaptées à s'accoupler avec et guider de façon graduelle et glissante la chaîne (7) d'un pignon (6) à l'autre.

3. Dérailleur selon la revendication 1 ou 2, **caractérisé en ce que** l'action de déraillement exercée par les moyens à came (28, 29) sur la chaîne (7) a une composante de déraillement horizontale et une composante de déraillement verticale.

4. Dérailleur selon une quelconque des revendications précédentes de 1 à 3, **caractérisé en ce que** l'élément dérailleur (24, 25) est monté sur un élément de support (12) d'une façon qu'il peut tourner sur un axe (24a, 25a).

5. Dérailleur selon la revendication 4, **caractérisé en ce que** l'axe (24a, 25a) forme avec la verticale un angle inférieur à 90°.

6. Dérailleur selon la revendication 4 ou 5, **caractérisé en ce que** les moyens à came (28, 29) ont une pluralité de positions angulaires autour de l'axe (24a, 25a) dans lesquelles ils interfèrent avec la chaîne (7) et une pluralité de positions angulaires dans lesquelles ils n'interfèrent pas avec la chaîne (7); lesdites positions angulaires d'interférence étant alternées avec les positions angulaires de non-interférence.

7. Dérailleur selon la revendication 6, **caractérisé en ce que** les positions angulaires d'interférence sont instables et les positions angulaires de non-interférence sont stables.

8. Dérailleur selon la revendication 6 ou 7, **caractérisé en ce que** les positions angulaires de non-interférence sont plus de trois.

9. Dérailleur selon une quelconque des revendications précédentes de 1 à 8, **caractérisé en ce que** l'élément dérailleur (24, 25) a une forme essentiellement courbée.

10. Dérailleur selon une quelconque des revendications précédentes de 1 à 9, **caractérisé en ce qu'**il comprend deux éléments dérailleurs (24, 25) adaptés à fonctionner ensemble pour bouger la chaîne (7) sur les pignons (6); les éléments dérailleurs (24, 25) comprenant respectifs moyens à came (28, 29) adaptés à s'accoupler avec et guider de façon graduelle et glissante la chaîne (7) d'un pignon (6) à l'autre.

11. Dérailleur selon la revendication 10, **caractérisé en ce qu'**il y a seulement un élément dérailleur (24, 25) de chaque côté de la chaîne (7).

12. Dérailleur selon la revendication 10 ou 11, **caractérisé en ce que** les éléments dérailleurs (24, 25) sont montés sur l'élément de support (12) d'une façon qu'ils peuvent tourner autour de respectifs axes (24a, 25a) qui sont substantiellement parallèles l'un à l'autre.

13. Dérailleur selon la revendication 12, **caractérisé en ce qu'**il comprend des moyens d'activation (20, 21, 22) adaptés à donner aux éléments dérailleurs (24, 25) les respectives rotations autour des axes (24a, 25a).

14. Dérailleur selon la revendication 13, **caractérisé en ce que** les éléments dérailleurs (24, 25) tournent dans la même direction.

15. Dérailleur selon la revendication 13 ou 14, **caractérisé en ce que** les moyens d'activation (20, 21, 22) comprennent des moyens élastiques (21) qui ont une action élastique sur la rotation des éléments dérailleurs (24, 25) autour de leurs axes (24a, 25a).

16. Dispositif de changement de vitesse de bicyclette **caractérisé en ce qu'**il comprend un dérailleur (11) selon chacune des revendications précédentes de 1 à 15.

17. Bicyclette, **caractérisée en ce qu'**elle comprend au moins un dérailleur (11) selon chacune des revendications précédentes de 1 à 15.

18. Bicyclette selon la revendication 17 et comprenante une chaîne de transmission (7), un moyeu (4) central qui guide la chaîne (7), un moyeu postérieur (3) guidé par la chaîne (7), une pluralité de pignons antérieurs (6) montés sur le moyeu (4) central et une pluralité de pignons postérieurs (5) montés sur le moyeu (3) postérieur, la bicyclette étant **caractérisée en ce que** le nombre de pignons antérieurs (6) est plus grand que le nombre de pignons postérieurs (5).

19. Bicyclette selon la revendication 18, **caractérisée en ce que** les pignons antérieurs (6) sont en nombre plus grand que trois.
